(19) **Europäisches Patentamt**

**European Patent Office**

**Office européen des brevets**

(11) Veröffentlichungsnummer: **0 352 449**
**A1**

(12) **EUROPÄISCHE PATENTANMELDUNG**

(21) Anmeldenummer: **89110311.1**

(22) Anmeldetag: **07.06.89**

(51) Int. Cl.⁴: **B60G 7/02 , B60G 21/04**

(30) Priorität: **25.07.88 DE 3825257**

(43) Veröffentlichungstag der Anmeldung:
**31.01.90 Patentblatt 90/05**

(84) Benannte Vertragsstaaten:
**DE ES FR GB IT**

(71) Anmelder: **WOCO Franz-Josef Wolf & Co.**
**Sprudelallee 19**
**D-6483 Bad Soden-Salmünster(DE)**

(72) Erfinder: **Wolf, Franz Josef**
**Sprudelallee 19**
**D-6483 Bad Soden-Salmünster(DE)**
Erfinder: **Pletsch, Hubert**
**Am Quellenrain 13**
**D-6483 Bad Soden-Salmünster(DE)**

(74) Vertreter: **Jaeger, Klaus, Dr. et al**
**Patentanwälte JAEGER, LORENZ & KOESTER**
**Pippinplatz 4a**
**D-8035 München-Gauting(DE)**

(54) **Spurkorrigierende Verbundlenkerachse.**

(57) Spurkorrigierende Verbundlenkerachse, gekennzeichnet durch eine Schrägstellung der Gummi-Metall-Lager (4, 5), mit der der Lenkerrahmen am Fahrzeug gelagert ist. Dadurch wird ein verbessertes Spurkorrekturverhalten der verbundlenkerachse erhalten.

**EP 0 352 449 A1**

## Spurkorrigierende Verbundlenkerachse

Die Erfindung betrifft eine spurkorrigierende Verbundlenkerachse der im Oberbegriff des Anspruchs 1 genannten Art.

Das Problem der Spurkorrektur der Hinterräder bei mindestens dreirädrigen Fahrzeugen, insbesondere bei vier und mehrrädrigen Kraftfahrzeugen, ist bereits verschiedentlich zu lösen versucht worden. So ist insbesondere versucht worden, die Radachsen selbst in Gummi-Metall-Hülsenlagern aufhängend zu lagern, die durch Aussparungen im Elastomer des Lagers bei Spurbelastungen an Gleitflächen im Lagerelastomer geführt eine begrenzte Spurkorrektur automatisch ausführen. Diese Lager sind jedoch aufwendig in der Herstellung und in der Abstimmung, aufwendig in der eine spezielle Sorgfalt erfordernden Montage am Fahrzeug und schließlich in der Wirkung verbesserungsbedürftig.

In der Praxis wird daher für mechanisch einfache Hinterradaufhängungen nach wie vor auf elastische Schwenkanlenkungen zurückgegriffen, bei denen vor allem Längslenker frei schwenkbar und durch ein Zusatzfedersystem abgefedert am Fahrzeugrahmen angelenkt sind oder die drehelastisch am Fahrzeugrahmen angelenkt sind, und zwar um eine Achse schwenkbar, die zur Fahrzeuglängsachse einen rechten Winkel bildet.

Diese Art der schwenkbaren Anlenkung an einen Fahrzeugrahmen unter Verwendung elastischer Gummi-Metall-Lager wird auch bei Aufhängungssystemen mit komplexerem Verhalten angewendet, so beispielsweise bei der Verbundlenkeraufhängung. Spurfehler der Hinterräder werden bei dieser Art der Aufhängung allerdings kaum bewirkt. Eine verbesserungsbedürftige Spurhaltigkeit bei Kurvenfahrt und ein unnötig hoher Reifenverschleiß auf den Hinterrädern sind die Folgen einer unzureichenden Spurkorrektur der Hinterräder, insbesondere bei Personenkraftfahrzeugen.

Ausgehend von diesem Stand der Technik liegt der Erfindung die Aufgabe zugrunde, eine spurkorrigierende Hinterradaufhängung für Fahrzeuge, insbesondere spurkorrigierende Verbundlenkerachse für die Hinterradaufhängung von Personenkraftwagen, zu schaffen, bei der mit Mitteln, die gegenüber der gebräuchlichen Aufhängung praktisch keine Mehrkosten verursacht, aber dennoch zu einer wirksamen Spurkorrektur der Hinterräder des Fahrzeugs auch bei schneller Kurvenfahrt führt.

Zur Lösung dieser Aufgabe schafft die Erfindung eine spurkorrigierende Verbundlenkerachse mit den im kennzeichnenden Teil des Anspruchs 1 genannten Merkmalen.

Ausgestaltungen der Verbundlenkerachse sind Gegenstand der Unteransprüche.

Der Erfindung liegt der wesentliche Gedanke zugrunde, die erwünschte Spurkorrektur weder durch eine nur mäßig effektive unmittelbare Achsspurkorrektur, noch durch ein aufwendiges gelenkiges Lenkersystem zu bewirken, sondern bei einer konstruktiv relativ einfachen Verbundlenkerachse, die üblicherweise zumindest im wesentlichen aus zwei Längslenkern, die die Radachsen tragen, und einem querliegenden Koppelglied als Lenkerrahmen besteht, dadurch als unmittelbar übertragendes und koppelndes Glied einer Spurkorrektur für die Hinterräder des Fahrzeugs zu verwenden, daß die elastisch gelagerte Anlenkung am Fahrzeugrahmen nicht wie bisher über elastische Lager mit Schwenkachsen erfolgt, die rechtwinklig zur Fahrzeuglängsachse ausgerichtet sind, sondern durch eine symmetrische Schrägstellung beider starr miteinander gekoppelter Schwenkachsen der Anlenklager der Verbundlenkerachse die erwünschte automatische Spurkorrektur der beiden an diesem Lenkerrahmen aufgehängten Hinterräder eines Fahrzeugs herbeizuführen.

Diese Spurkorrektur erfolgt dann mit besonders hohem Fahrkomfort, wenn die Gummi-Metall-Lager drehelastisch auf die Ankopplung des Lenkerrahmens reagieren.

Zur Feinabstimmung der Spurkorrektur durch die symmetrisch zur Fahrzeuglängsachse schräggestellten Gummi-Metall-Lager sind diese vorzugsweise durch geeignete Maßnahmen zur Einstellung der Lagerdaten abgestimmt. Als solche Maßnahmen kommen in an sich bekannter Weise vor allem Ausnehmungen, Hohlkanäle, Hohlräume und/oder das Einvulkanisieren zusätzliche r Formversteifungsbleche, meist in Hülsenform, und vor allem eine entsprechende Vorspannung des Elastomers im Lager, genauer in der äußeren Lagerhülse, in Frage.

Der wesentliche Vorteil dieser Aufhängung gegenüber herkömmlichen spurkorrigierenden Lagern mit trichterförmigen Elastomerausnehmungen zur Führung der Elastomerverspannung bei Spurbelastung können die bei der spurkorrigierenden Verbundlenkerachse gemäß der Erfindung verwendeten Gummi-Metall-Lager mit einem relativ großen Gummivolumen ausgestattet werden, ohne daß das Lager selbst im Verhalten schwammig wird oder gar zu schwimmen beginnt. In jedem Fall führt die durch die Schrägstellung der Schwenkachsen im Lagergummi erzeugte asymmetrische Verspannung beim Auftreten einer Spurbelastung des Systems zu einem von der Kennung her sauberen und steifen Korrigieren der Spur der Hinterräder durch ein spurkorrigierendes Verschwenken des Verbundlenkerrahmens relativ zur Fahrzeuglängsachse. Wollte man den Versuch unternehmen, die hierbei möglichen weiten Spurkorrekturwinkel durch unmittelbar mit der Radachse zusammenwirkende spurkorrigierende Gummi-Metall-Lager zu erzielen, würde hierzu ein so weiches Lager erforderlich sein, daß eine spurhaltige Radführung nicht mehr ausreichend gewährleistet wäre. Selbst bei einer Anordnung der üblichen durch trichterförmige Gleitflächen spurrigierend wirkenden Lager in der Anlenkung einer Verbundlenkerachse an einem Fahrzeugrahmen muß noch ein Kompromiß zwischen ausreichend großer Spurkorrektur bei Kurvenfahrt einerseits und einer ausreichend festen, also nicht im Gummi schwimmenden Spurhaltigkeit der Radaufhängung gefunden werden, der meist zu Lasten der Spurkorrektur ausfällt. Bei dem spurkorrigierenden Aufhängungssystem mit den zur Fahrzeuglängsachse schräg gestellten Gummi-Metall-Aufhängungslagern für die Hinterradaufhängung, speziell Verbundlenkerachse, braucht dagegen für diese Abstimmung aufgrund der im Gummi-Metall-Lager automatisch richtig durch die Schrägstellung der Schwenkachse gleichsam als Vorspannung erzeugten Korrekturspannungen kein solcher Kompromiß eingegangen zu werden. So kann das die Aufhängung abfedernde und korrigierende Elastomervolumen ohne weiteres doppelt so groß wie bei den herkömmlichen Lagern bemessen sein, ohne daß das Lager seine Steifigkeit verliert oder die effektiv verfügbare Spurkorrektur vermindert wird.

Die Erfindung ist im folgenden anhand eines Ausführungsbeispiels in Verbindung mit den Zeichungen näher erläutert. Es zeigen:

Fig. 1 in schematischer Darstellung das Prinzip einer spurkorrigierenden Verbundlenkerachse gemäß der Erfindung;

Fig. 2 im Axialschnitt ein drehelastisches Hülsenlager für die in Fig. 1 gezeigte Aufhängung; und

Fig. 3 das in Fig. 2 gezeigte Lager im Radialschnitt.

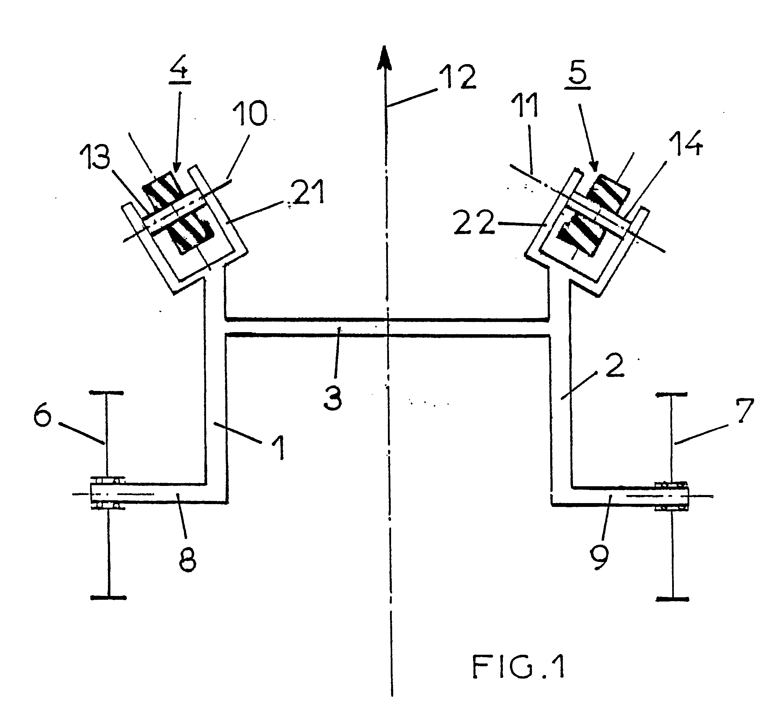

In der Fig. 1 ist in Draufsicht und in schematischer Darstellung die Prinzipskizze einer spurkorrigierenden Verbundlenkerachse für die Hinterradaufhängung eines Personenkraftfahrzeugs gezeigt. Die Verbundlenkerachse besteht im wesentlichen aus zwei Längslenkern 1,2, die durch ein querliegendes Koppelglied 3 miteinander verbunden sind. Der Lenkerrahmen 1,2,3 ist über Gummi-Metall-Lager 4,5 an einem hier in den Zeichnungen nicht dargestellten Fahrzeugrahmen schwenkbar angelenkt. Am gegenüberliegenden freien Längsende des Lenkerrahmens sind die Fahrzeughinterräder 6,7 über Radachsen 8,9 frei drehbar gelagert. Die zugehörigen Dämpfer und Federn, wie sie für Aufhängungen dieser Art in den verschiedensten konstruktiven Ausgestaltungen und Abstimmungen üblicherweise vorgesehen sind, sind aus Gründen der klareren Darstellung in der Fig. 1 nicht mit dargestellt.

Erfindungswesentliches Merkmal der in Fig. 1 gezeigten Verbundlenkerachse bzw. ihrer Aufhängung am Fahrzeugrahmen ist, daß die Schwenkachsen 10,11 der Gummi-Metall-Lager 4,5 gegenüber der Fahrzeuglängsachse 12 schräg gestellt sind. Bei einer durch Kurvenfahrt verursachten Fehlspurbeaufschlagung erfolgt dadurch eine nichtaxialsymmetrische Verspannung des Elastomers im Lager, die ein Auswandern des Lenkerträgers 13 bzw. 14 aus dem Lagerelastomer und damit die Spurkorrektur über ein Nachlenken des Lenkerrahmens zur Folge hat.

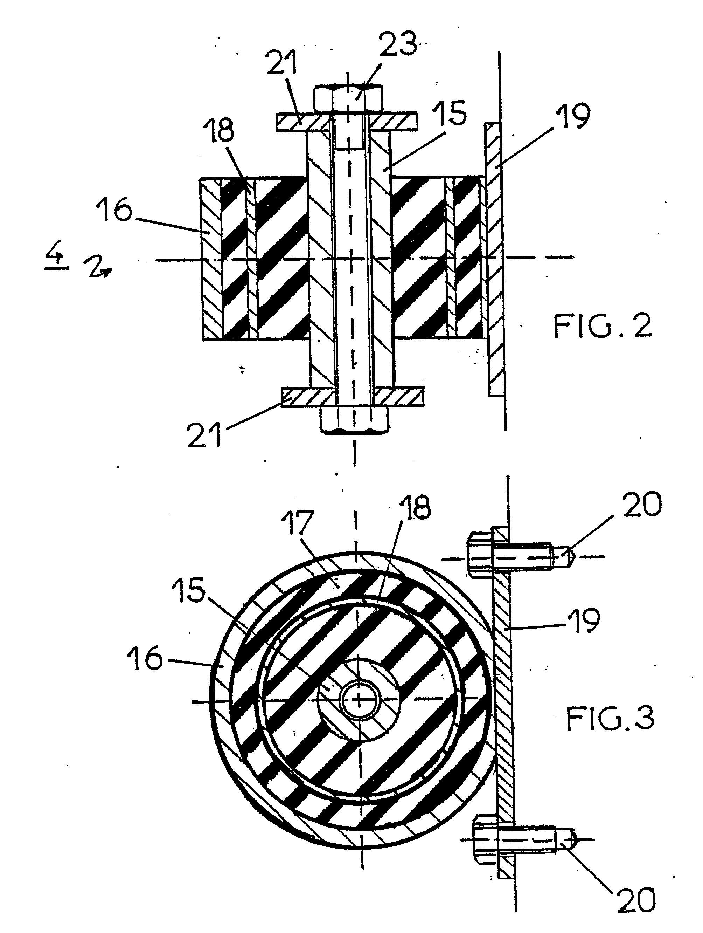

Ein Ausführungsbeispiel für die in der Fig. 1 gezeigten Lager 4 und 5 ist in den Fig. 2 und 3 im Axialschnitt bzw. im Radialschnitt dargestellt.

Das in den Fig. 2 und 3 gezeigte Lager ist ein Hülsenlager, bei dem eine innere Hülse 15 in einer äußeren Hülse 16 koaxial angeordnet ist, wobei beide Hülsen durch eine zylindrische, ebenfalls koaxial ausgerichtete Gummifeder 17 fest miteinander verbunden sind. Dabei bedeutet "fest miteinander verbunden", daß die innere Hülse 15 mit ihrem Außenmantel drehfest mit dem Elastomer 17 verbunden ist, während das Elastomer 17 seinerseits mit seiner Außenmantelfläche ebenfalls drehfest an der Innenwand der Außenhülse 16 verankert ist. Die beiden Hülsen 15,16 sind dadurch unter rückstellender Federbeaufschlagung durch die Feder 17 begrenzt relativ gegeneinander verdrehbar.

Zur Formversteifung ist die Feder 17 weiterhin in an sich bekannter Weise mit einer Formblechhülse 18 ausgerüstet. Bei Bedarf können mehrere solcher Formblechhülsen, auch anders konfigurierte, beispielsweise gewellte Formblechhülsen, vorgesehen sein.

Die äußere Hülse 16 der Hülsenfeder ist fest mit einer Montageplatte 19 verbunden, die ihrerseits, beispielsweise über Schraubbolzen 20, mit dem Fahrgestell oder Rahmen oder anderen systemfesten Teilen des Fahrzeugs verbunden ist.

Mit der Hülse 15 sind die Anlenkgabeln 21,22 (vergl. auch Fig. 1) des Lenkerrahmens 1,2,3 drehfest verbunden, beispielsweise durch Schraubbolzen 23. Der Verbundlenkerrahmen 1,2,3 ist also an dem in den Fig. nicht dargestellten Fahrzeugrahmen über die Gummi-Metall-Lager 4,5 drehelastisch und, bezogen auf die Schwenkachse 10,11 des Lagers, axial beschränkt verschiebbar, angelenkt. Jede auf den Lenkerrahmen 1,2,3 bei Kurvenfahrt einwirkende, durch eine Fehlspureinstellung in Verbindung mit der am Fahrzeug wirksamen Zentrifugalkraft führt daher zu einer axialtranslatorischen und rotatorischen Verspannung der Gummifeder 17, die bei Rückstellung zur Spurkorrektur führt.

## Ansprüche

1. Spurkorrigierende Verbundlenkerachse für die Hinterradaufhängung von Fahrzeugen, bei der ein zumindest im wesentlichen aus zwei Längslenkern und einem querliegenden Koppelglied bestehender Lenkerrahmen über zwei symmetrisch zur Fahrzeuglängsachse angeordnete Gummi-Metall-Lager schwenkbar an einem Fahrzeugrahmen angelenkt ist,
dadurch **gekennzeichnet,** daß die Schwenkachsen (10,11) der Gummi-Metall-Lager (4,5) zur Fahrzeuglängsachse (12) symmetrisch schräggestellt angeordnet sind.

2. Spurkorrigierende Verbundlenkerachse nach Anspruch 1,
dadurch **gekennzeichnet,** daß die Anlenkung des Lenkerrahmens (1,2,3) am Fahrzeugrahmen über drehelastische Gummi-Metall-Lager (4,5) erfolgt.

3. Spurkorrigierende Verbundlenkerachse nach einem der Ansprüche 1 oder 2,
dadurch **gekennzeichnet,** daß das Gummi-Metall-Lager (4,5) zur Feinabstimmung der Spurkorrektur mit Ausnehmungen, Hohlkanälen, Hohlräumen und/oder Formversteifungsblechen (18) im Elastomer versehen und/oder das Elastomer (17) im Lager vorgespannt ist.

4. Spurkorrigierende Verbundlenkerachse nach einem der Ansprüche 1 bis 3,
dadurch **gekennzeichnet,** daß die Gummi-Metall-Lager (4,5) als Radiallager, insbesondere Hülsenlager, ausgebildet sind.

FIG.1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 707 162 (MAZDA) <br> * Figuren 1-9,11-19; Spalte 5, Zeile 42 - Spalte 6, Zeile 41 * <br> --- | 1-4 | B 60 G 7/02 <br> B 60 G 21/04 |
| X | FR-A-2 564 785 (RENAULT) <br> * Figuren 1,3,6; Zusammenfassung; Seite 2, Zeilen 17-34; Seite 4, Zeilen 14-15; Seite 5, Zeile 29 - Seite 6, Zeile 6 * <br> --- | 1-4 | |
| A | FR-A-2 407 399 (VOLKSWAGEN) <br> * Figuren 1-4 * <br> --- | 1-4 | |
| A | FR-A-2 520 072 (RENAULT) <br> * Figuren 1-5 * <br> ----- | 1-4 | |

**RECHERCHIERTE SACHGEBIETE (Int. Cl.5)**

F 16 F
B 60 G

Der vorliegende Recherchenbericht wurde für alle Patentansprüche erstellt

| Recherchenort | Abschlußdatum der Recherche | Prüfer |
|---|---|---|
| DEN HAAG | 05-09-1989 | TORSIUS A. |

EPO FORM 1503 03.82 (P0403)